# EUROPÄISCHE PATENTSCHRIFT

(11) **EP 2 352 597 B1**
(45) Veröffentlichungstag und Bekanntmachung des Hinweises auf die Patenterteilung: **29.10.2014**
(21) Anmeldenummer: 09752781.6
(22) Anmeldetag: 02.11.2009
(51) Int. Cl.: B03C 3/68

(54) **TESTANLAGE FÜR ELEKTROFILTER**
TEST INSTALLATION FOR ELECTRICAL FILTERS
INSTALLATION D'ESSAI POUR ÉLECTROFILTRES

(30) Priorität: 05.12.2008 DE 102008060597
(43) Veröffentlichungstag der Anmeldung: 10.08.2011
(73) Patentinhaber: Siemens Aktiengesellschaft, 80333 München (DE)
(72) Erfinder: STEINGRÄBER, Michael, 91336 Heroldsbach (DE); KLÖCKNER, Michael, 90768 Fürth (DE); ZINTL, Andreas, 91330 Eggolsheim-Bammersdorf (DE)
(86) Internationale Anmeldenummer: PCT/EP2009/064418
(87) Internationale Veröffentlichungsnummer: WO 2010/063523

(56) Entgegenhaltungen:
- WO-A-95/33568
- US-A- 4 860 149
- US-A- 5 068 811
- US-A1- 2005 237 693

## Beschreibung

Die Erfindung betrifft eine Testanlage für Elektrofilteranlagen.

Elektrofilter finden in den vielfältigsten, technischen Prozessen Verwendung zur Entstaubung von Gasen. Hierbei wird ein Paket von Abscheideelektroden in dem Gasstrom angeordnet, und zwischen diesen Elektroden werden vorzugsweise drahtförmige Sprühelektroden eingefügt, wobei zwischen den elektrisch jeweils parallel geschalteten Sprühelektroden einerseits und den Abscheideelektroden andererseits eine hohe Gleichspannung in der Größenordnung von etwa 40-150 kV angelegt wird. Hierdurch werden die Gasmoleküle ionisiert und geben sodann ihre Ladung an die in dem Gasstrom enthaltenen Staubteilchen ab, welche negativ aufgeladen werden und dadurch zu dem positiv geladenen Teil der Elektroden gezogen werden. Dort können sie durch Vibration oder durch Abstreifeinrichtungen gelöst werden und fallen sodann nach unten in eine Staubsammelvorrichtung.

Mit diesem Prinzip lassen sich die unterschiedlichsten Partikel aus den verschiedensten Gasströmen abscheiden, woraus allerdings je nach Einsatzfall stark schwankende Betriebsparameter für einen Elektrofilter resultieren.

Zur Effizienzsteigerung bestehender Elektrofilteranlagen werden beispielsweise neue Technologien zur Hochspannungserzeugung (Umrichteranlagen) und/oder eine Optimierung des Filterbetriebes (PC-basierte Optimierungssoftware) entwickelt, durch die höhere Abscheideleistungen und/oder ein Betrieb mit geringerem Energieverbrauch ermöglicht wird. Für die Effizienzsteigerung durch den Einsatz dieser neuen Technologien / Optimierungen wird häufig vorab ein Nachweis gefordert. Dieser Nachweis kann jedoch bedingt durch die komplexen Einflussfaktoren und wechselnden Betriebsparameter der Elektrofilter nicht vorab theoretisch ermittelt werden. Daher werden Testinstallationen mit einem oder mehreren Testgeräten ausgeführt, die den Nachweis unter gegebenen Betriebsbedingungen über eine längere Testphase (z.B. 1 Monat) erbringen.

Bestehen die neuen Hochspannungserzeuger beispielsweise aus je einem Umrichtersteuerschrank und einem speziellen Hochspannungs-Gleichrichtergerät, so müssen diese für den Testbetrieb temporär die bestehenden Hochspannungsanlagen ersetzen. Für den Nachweis sind zusätzlich eine Reingasstaubmessung sowie eine Energieverbrauchsmessung erforderlich. Der Aufwand sowie das erforderliche Installationsmaterial für die Testinstallation variieren je nach den gegebenen örtlichen Aufstellungsbedingungen sowie dem Vorhandensein der notwendigen Messsysteme und muss individuell projektiert werden.

Bisher müssen die neuen Umrichtersteuerschränke in der Nähe der zu ersetzenden Steuerschränke aufgestellt werden, damit vorhandene Leistungs- und Steuerkabelanschlüsse wiederverwendet werden können. Je nach örtlichen Platzverhältnissen ist dies allerdings nicht in jedem Fall möglich, wodurch neue Zuleitungen temporär zu verlegen sind. Bei vorhandenen Netzspannungen mit mehr als 500 V werden oft zusätzlich z.B. Spartransformatoren notwendig, für die ebenfalls ein Aufstellungsort gefunden werden muss. Der Aufwand für den Umschluss (Transport / Aufstellung / Ab- und Anklemmen der Leistungs-/Steuer-Kabel ist daher sehr hoch.

Zudem sind die vorhandenen Hochspannungs-Gleichrichtergeräte gewöhnlich entweder in Trafozellen oder auf dem Filterdach installiert. Die Platzverhältnisse der Trafozellen erlauben in der Regel keine Aufstellung eines weiteren Testgerätes, wodurch die vorhandenen Hochspannungs-Geräte zuerst demontiert und später rückmontiert werden müssen (wobei dies je nach Transportmöglichkeit innerhalb der Gebäude evtl. nicht mehr möglich ist). Bei der Aufstellung auf dem Filterdach ist der Aufwand der temporären Installation ebenfalls sehr aufwendig, da hierfür ein Kran sowie mechanische Anpassungen für den Hochspannungsanschluss erforderlich werden.

Da während der Umrüstung die Elektrofilteranlage stillsteht, muss der Umschluss auf die Testanlage und später die Rückrüstung auf die vorhandene Technik innerhalb möglichst kurzer Zeit realisiert werden. Vorgenannter Umrüstungsaufwand ist dabei jedoch recht hoch und bedarf recht langer Stillstandszeiten.

Zudem sind bei der bisherigen Aufstellung der Testanlagen diese den teilweise schwierigen Umgebungsbedingungen (Umgebungstemperatur, Luftverschmutzung etc.) ausgesetzt. Zusätzlich werden die Geräte oft durch den Transport zur und insbesondere innerhalb der Anlagen geschädigt, wodurch eine kostenintensive Funktionskontrolle / Reparatur / Reinigung vor einem erneuten Einsatz erforderlich wird.

Aus der US 5,068,811 eine Testanlage für eine Elektrofilteranlage bekannt, wobei die Testanlage im Inneren eines Gehäuses einen Umrichtersteuerschrank, eine Einspeisung für den Umrichtersteuerschrank, einen Rechner, Kabeln zum Anschluss des Umrichtersteuerschranks an ein Hochspannungsgleichrichtergerät der Elektrofilteranlage sowie einen Stromanschluss aufweist, und wobei das Gehäuse Ausnehmungen zur Durchführung zumindest der Anschlussvorrichtungen , der Kabel sowie von Stromzuführüngen für die Einspeisung und für den Stromanschluss aufweist. Aus der US 2005/0237693 A1 ist eine Elektrofilteranlage bekannt, bei der das Gehäuse Ausnehmungen zur Durchführung zumindest der Anschlussvorrichtungen, der Kabel sowie von Stromzuführungen für die Einspeisung und für den Stromanschluss aufweist.

Der Erfindung liegt die Aufgabe zugrunde, eine Testanlage für Elektrofilteranlagen anzugeben, die die genannten Nachteile überwindet.

Diese Aufgabe wird gelöst durch eine Testanlage für eine Elektrofilteranlage, wobei die Testanlage im Inneren eines Gehäuses eine Staubmesseinrichtung, einen Umrichtersteuerschrank, eine Einspeisung für den Umrichtersteuerschrank, einen Rechner, Anschlussvorrichtungen zur Verbindung der Staubmesseinrichtung mit einem Rein- und einem Rohgasstaubkanal der Elektrofilteranlage, Kabel zum Anschluss des Umrichtersteuerschranks an ein Hochspannungs-Gleichrichtergerät der Elektrofilteranlage sowie einen Stromanschluss aufweist und wobei das Gehäuse Ausnehmungen zur Durchführung zumindest der Anschlussvorrichtungen, der Kabel sowie von Stromzuführungen für die Einspeisung und für den Stromanschluss aufweist.

Ein großer Vorteil der erfindungsgemäßen Lösung ist es, dass unabhängig von den gegebenen Einsatzorten / Aufstellungsbedingungen alle für den Testbetrieb notwendigen Komponenten in einem Gehäuse installiert sind und somit einfach transportiert werden können. Hierdurch wird der Nachweis der Optimierung des existierenden Elektrofilters, d.h. der Effizienzsteigerung, sowohl für den Kunden als auch für den Lieferanten zeit- und kostenoptimiert realisiert, da die Zeiten für die Vorbereitungen und die Nachbereitung zum Testbetrieb minimiert werden. Auch der Transport zum und vom Kunden kann schneller vollzogen werden.

Durch den Einbau in ein Gehäuse und das Mitführen aller für den Testbetrieb notwendigen Komponenten - inklusive der Möglichkeit des Nachweises des Optimierungspotentials durch eine Staubmesseinrichtung vor und nach dem Elektrofilter - ist das System komplett autark und kann dem Kunden einen schnellen Überblick über das Verbesserungspotential geben. Die erforderlichen Leistungs-/Steuerkabel inklusive des Hochspannungskabels (üblicherweise bis 110 kV) werden auf einer speziell entwickelten, an die Gegebenheiten des Gehäuses angepassten Kabeltrommelanordnung mitgeführt. Die vorgesehenen Kabellängen sind vorteilhafterweise mit 100 m so dimensioniert, dass damit nahezu alle Aufstellungsarten abgedeckt werden können. Die Ausführung des z.B. 110 kV-Elektrofilterkabels erfolgt durch eine Seitenwand des Gehäuses in Form einer speziell entwickelten, an die Gegebenheiten des Gehäuses angepassten Durchführung. Da diese Kabel in der Regel auf das Dach der Elektrofilteranlage geführt werden müssen, wird vorteilhafterweise ebenfalls ein Portal mit diversen Traversen mitgeführt.

Der Aufwand für den Umschluss (Transport / Aufstellung / Ab- und Anklemmen der Leistungs-/Steuerkabel) ist bei der erfindungsgemäßen Lösung sehr niedrig, da die vorhandenen Hochspannungsgeräte (der zu optimierenden Elektrofilteranlage) an Ort und Stelle verbleiben und lediglich der Leistungsanschluss des Umrichtersteuerschranks über ein Niederspannungskabel zum Hochspannungs-Gleichrichtergerät der Elektrofilteranlage ausgeführt werden muss. Dadurch ergeben sich deutlich kürzere Anlagenstillstandszeiten, da alle Vorbereitungen während des Betriebs der Elektrofilteranlage erfolgen können und lediglich für den Hochspannungsanschluss ein kurzer Stillstand erforderlich wird. Zudem entfällt in der Regel eine kostenintensive Funktionskontrolle / Reparatur / Reinigung, da Transportschäden weitestgehend ausgeschlossen sind und eine Nacharbeit auch aufgrund optimaler Umgebungsbedingungen (Schutz durch das Gehäuse) nicht erforderlich ist. Darüber hinaus entfällt die ggf. erforderliche Organisation und Installation fehlender Messeinrichtungen (speziell die Reingasstaubmessung), da bei der mobilen Lösung gemäß der Erfindung auch eine Staubmesseinrichtung mitgeführt wird, die nur einseitig am Rein- bzw. Rohgasstaubkanal montiert werden muss.

Durch die speziell entwickelte Software, die auf dem Rechner installiert ist, kann die Optimierung der Testanlage in Abhängigkeit von den Prozessparametern erfolgen. Vorteilhafterweise sind Testprozeduren bereits voreingestellt und müssen so nur minimal den Vor-Ort-Bedingungen angepasst werden. Dazu ist ein Programm zur Auswertung von Messwerten der Staubmesseinrichtung und Bestimmung eines Optimierungspotentials einer Elektrofilteranlage bei Ablauf auf einem Rechner einer Testanlage vorgesehen, wobei voreingestellte Testprozeduren bereits enthalten sind, die an die jeweilige Elektrofilteranlage und Umgebungsbedingungen anpassbar sind. Vorzugsweise ist eine Remote-Funktion zur Fernsteuerung der Testanlage enthalten.

In einer vorteilhaften Form der Ausgestaltung ist das Gehäuse als Seecontainer ausgebildet. Die Wahl eines Seecontainers eröffnet die Möglichkeit, weltweit solche Testbetriebe durchführen zu können, wobei der Transport durch ein derart standardisiertes Gehäuse auf einfache Weise und kostengünstig durchgeführt werden kann.

In einer weiteren vorteilhaften Ausführungsform weist die Einspeisung einen Einspeiseadapter auf, mittels dem der Umrichtersteuerschrank an Stromzuführungen unterschiedlicher Spannungen anschließbar ist. Der weltweite Betrieb der mobilen Einrichtung (Testanlage) erfordert eine völlig flexible Anpassung an alle vorkommenden Aufstellungs- und Betriebsbedingungen. Durch den Einspeiseadapter ist die elektrische Einspeisung für die Testanlage an viele Spannungsreihen (z.B. von 400 V bis 700 V) problemlos möglich.

In einer weiteren vorteilhaften Ausführungsform weist der Stromanschluss einen Netzadapter auf, mittels dem die Testanlage an Stromzuführungen unterschiedlicher Spannungen anschließbar ist. Somit ist auch die Eigenversorgung der Testanlage variabel (z.B. für USA 115 V, Europa 220 V).

Vorteilhafterweise sind dabei der Einspeiseadapter und/oder der Netzadapter als Spartransformatoren ausgeführt.

In einer weiteren vorteilhaften Ausführungsform sind der Rechner und die Staubmesseinrichtung mittels einer Datenverbindung miteinander verbunden. So können die Messwerte der Staubmesseinrichtung automatisch vom Rechner ausgewertet und der Nachweis über die mögliche Effizienzsteigerung (das Optimierungspotential) erbracht werden.

In einer weiteren vorteilhaften Ausführungsform weist der Rechner eine Schnittstelle zur Datenübertragung auf, über die die Testanlage fernsteuerbar ist. Vorteilhafterweise ist hierzu eine Remote-Funktion zur Fernsteuerung der Testanlage im Programm, das auf dem Rechner abläuft, enthalten. Die Schnittstelle kann dabei in üblicher Form ausgestaltet sein (Modem / Internet / WLAN etc.). Da der Auf- und Abbau der Testanlage durch Montagepersonal erfolgen kann und über die Remote-Funktion die Inbetriebnahme und der eigentliche Testbetrieb sowie die Überwachung der Anlage nicht vor Ort erfolgen muss, wird für die Inbetriebnahme der Testanlage für den Testbetrieb nur selten IBS- (Inbetriebnahme / Service-) Personal vor Ort benötigt, wodurch weitere Kosten gespart werden können.

In einer weiteren vorteilhaften Ausführungsform ist im Inneren des Gehäuses ein Bedienplatz vorgesehen, der durch zumindest eine elektrisch isolierte Wand vor Hochspannung geschützt ist. Hierdurch wird die Personensicherheit für am Bedienplatz, der vorteilhafterweise am PC vorgesehen ist, arbeitende Bediener der Testanlage garantiert.

In einer weiteren vorteilhaften Ausführungsform weist die Testanlage ein Hochspannungs-Gleichrichtergerät auf, das an den Umrichtersteuerschrank anschließbar ist, sowie Kabel zum Anschluss des Hochspannungs-Gleichrichtergeräts an einen Hochspannungsanschluss der Elektrofilteranlage. Somit kann bei dem Testbetrieb wahlweise das in der bestehenden Elektrofilteranlage vorhandene Hochspannungs-Gleichrichtergerät weiter genutzt werden (Hybridbetrieb) oder der Betrieb über das im Gehäuse befindliche spezielle Hochspannungs-Gleichrichtergerät realisiert werden. Auch für diese Installationsart werden die erforderlichen Leistungs-/Steuerkabel inklusive des Hochspannungskabels (üblicherweise bis 110 kV) in einer Länge von vorteilhafterweise 100 m auf für diese Anforderungen entworfenen Kabeltrommeln mitgeführt, um eine höchstmögliche Flexibilität zu gewährleisten.

In einer weiteren vorteilhaften Ausführungsform weist die Testanlage eine Klimaanlage auf. Auf diese Weise kann der zum Teil erheblichen Wärmeentwicklung (von z.B. Leistungsschrank, Spartrafo, Transformator) innerhalb des Gehäuses sowie die bei hohen Außentemperaturen und Sonneneinstrahlung möglicherweise zusätzlich entstehenden Aufheizung begegnet werden.

In einer weiteren vorteilhaften Ausführungsform weist das Innere des Gehäuses Abluftkanäle mit Ventilatoren auf. Hierdurch wird nicht nur für eine verbesserte Belüftung gesorgt (was beispielsweise für Bedienpersonal im Inneren des Gehäuses von Vorteil sein kann), sondern auch einer Wärmeentwicklung begegnet, ggf. im Zusammenspiel mit einer Klimaanlage.

Insgesamt ist es ein Kennzeichen der Erfindung, dass unabhängig von den gegebenen Aufstellungsbedingungen alle für den Testbetrieb notwendigen Komponenten in einem mobilen Gehäuse installiert sind. Die Wahl eines Seecontainers eröffnet die einfache Möglichkeit, weltweit solche Testbetriebe ohne einen aufwendigen Versand der Einzelkomponenten durchführen zu können. Wie beschrieben beinhaltet die Containerlösung vorteilhafterweise die flexible Einspeisung unterschiedlicher Anschlussspannungen, die Integration einer kompletten Umrichter-Hochspannungsanlage, einen Bedienplatz mit einer PC-Lösung zur Optimierung und Fernsteuerung der Testanlage, die Integration aller notwendigen Anschlusskabel inklusive Montagevorrichtung für die Kabelverlegung zum Elektrofilter (für Hybridbetrieb oder Betrieb mit integriertem Hochspannungs-Erzeuger), der Klimatisierung des Containers sowie Mitführung der Staubmesseinrichtung. Dabei werden alle für den Testbetrieb relevanten DIN-VDE-Vorschriften sowie auch die UL-Standards für die USA eingehalten. Bei der Notwendigkeit der Installation mehrerer Hochspannungs-Erzeuger können einfach mehrere Container modulweise zusammengestellt werden.

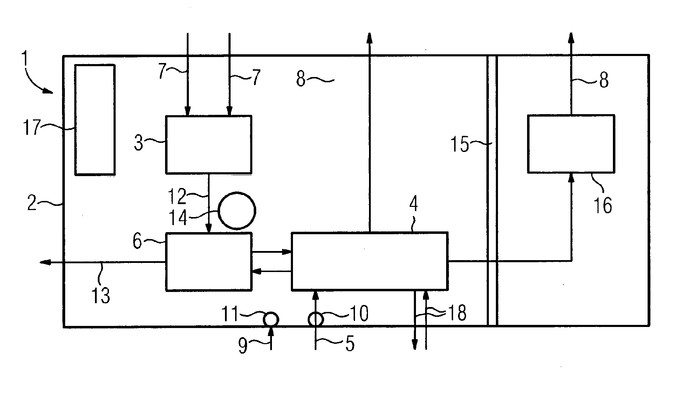

Im Folgenden wird die Erfindung anhand des in der Figur dargestellten Ausführungsbeispiels näher beschrieben und erläutert. Die Figur zeigt:
ein Ausführungsbeispiel einer mobilen Testanlage gemäß der Erfindung.

Die Figur zeigt eine schematische Darstellung einer mobilen Testanlage 1 in einem Gehäuse 2, das vorteilhafterweise als Seecontainer 2 ausgeführt ist. Im Inneren des Containers 2 befindet sich eine Staubmesseinrichtung 3 sowie Anschlussvorrichtungen 7 zur Montierung der Staubmesseinrichtung 3 am Rein- bzw. Rohgasstaubkanal der Elektrofilteranlage. Zur automatischen Erstellung des Nachweises des Optimierungspotentials ist die Staubmesseinrichtung 3 über eine Datenverbindung 12 mit einem Rechner 6 verbunden, der im Übrigen zur Steuerung der Testanlage 1 vorgesehen ist und über eine Schnittstelle 13 zur Datenübertragung ferngesteuert werden kann. Durch eine speziell entwickelte Software, die auf dem Rechner 6 installiert ist, erfolgt also zum Einen die Optimierung der Testanlage 1 in Abhängigkeit von den jeweiligen Prozessparametern, zum Anderen werden durch die Software alle Tools (wie z.B. Diagnosetools) bereitgestellt, die für eine Fernsteuerung über Modem/Internet erforderlich sind. Der Container 2 ist mit einem Bedienplatz 14 ausgestattet, der zur Personensicherheit von der Hochspannungsseite durch eine elektrisch isolierte Wand 15 innerhalb des Containers getrennt ist.

Der Umrichtersteuerschrank (Leistungsschrank) 4 ist mit dem Rechner 6 verbunden. Der Leistungsschrank 4 weist eine Einspeisung 5 auf, die zum Anschluss an verschiedene Spannungsreihen (z.B. von 400 V bis 700 V) mit einem Einspeiseadapter 10 (beispielsweise einem Spartrafo) ausgestattet ist. Zudem ist der Umrichtersteuerschrank 4 über ein Steuerkabel (Bus) 18 mit der Elektrofilteranlage verbunden. Der Umrichtersteuerschrank 4 kann wahlweise über Anschlusskabel 8 an ein vorhandenes Hochspannungs-Gleichrichtergerät der Elektrofilteranlage angeschlossen werden (Hybridbetrieb) oder an ein im Container 2 befindliches spezielles Hochspannungs-Gleichrichtergerät 16, das dann über Anschlusskabel 8 direkt an den Elektrofilter angeschlossen wird.

Der zum Teil erheblichen Wärmeentwicklung durch Leistungsschrank 4, Spartrafo 10 etc. innerhalb des Containers 2 sowie die bei hohen Außentemperaturen und Sonneneinstrahlung zusätzlich entstehende Aufheizung des Containers 2 wird durch eine spezielle Klimatechnik in Form einer Klimaanlage 17 und speziellen Abluftkanälen mit Ventilatoren (nicht eingezeichnet) begegnet. Für die Eigenversorgung des Containers 2 (für Rechner 6, Klimaanlage 17 usw.) ist ferner ein Stromanschluss 9 vorhanden, der für eine höchstmögliche Flexibilität (Netzspannung z.B. in USA 115 V, in Europa 220 V) ebenfalls mit einem als Spartrafo ausgeführten Netzadapter 11 ausgestattet ist. Nicht eingezeichnet sind in der Figur u.a. die für die mitgeführten Kabel 8 notwendigen und an die Containerlösung angepassten Kabeltrommeln und für die Kabelverlegung ggf. erforderliche Traversen, die ebenfalls im Container 2 mitgeführt werden können.

Zusammenfassend betrifft die Erfindung eine Testanlage für Elektrofilteranlagen. Um die Nachteile der bekannten Testanlagen, bei denen Einzelkomponenten teilweise an die Stelle der entsprechenden Komponenten der Elektrofilteranlage montiert werden müssen, woraus ein großer Aufwand für den Umschluss (Transport / Aufstellung / Ab- und Anklemmen der Leistungs-/Steuerkabel) und somit lange Anlagenstillstandszeiten resultieren, zu überwinden, wird eine Testanlage für eine Elektrofilteranlage vorgeschlagen, wobei die Testanlage im Inneren eines Gehäuses eine Staubmesseinrichtung, einen Umrichtersteuerschrank, eine Einspeisung für den Umrichtersteuerschrank, einen Rechner, Anschlussvorrichtungen zur Verbindung der Staubmesseinrichtung mit einem Rein- und einem Rohgasstaubkanal der Elektrofilteranlage, Kabeln zum Anschluss des Umrichtersteuerschranks an ein Hochspannungs-Gleichrichtergerät der Elektrofilteranlage sowie einen Stromanschluss aufweist und wobei das Gehäuse Ausnehmungen zur Durchführung zumindest der Anschlussvorrichtungen, der Kabel sowie von Stromzuführungen für die Einspeisung und für den Stromanschluss aufweist. Somit sind alle für den Testbetrieb notwendigen Komponenten in einem einfach zu transportierenden Gehäuse, das vorteilhafterweise als Seecontainer ausgeführt ist, installiert, und es ist lediglich für den Hochspannungsanschluss ein kurzer Stillstand der Elektrofilteranlage erforderlich.

## Patentansprüche

1. Testanlage (1) für eine Elektrofilteranlage, wobei die Testanlage (1) im Inneren eines Gehäuses (2) einen Umrichtersteuerschrank (4), eine Einspeisung (5) für den Umrichtersteuerschrank (4), einen Rechner (6), Kabeln (8) zum Anschluss des Umrichtersteuerschranks (4) an ein Hochspannungs-Gleichrichtergerät der Elektrofilteranlage sowie einen Stromanschluss (9) aufweist und wobei das Gehäuse (2) Ausnehmungen zur Durchführung zumindest der Kabel (8) sowie von Stromzuführungen für die Einspeisung (5) und für den Stromanschluss (9) aufweist,
**dadurch gekennzeichnet, dass**
die Testanlage (1) im Inneren des Gehäuses (2) eine Staubmesseinrichtung (3), Anschlussvorrichtungen (7) zur Verbindung der Staubmesseinrichtung (3) mit einem Rein- und einem Rohgasstaubkanal der Elektrofilteranlage und das Gehäuse (2) Ausnehmungen zur Durchführung zumindest der Anschlussvorrichtungen (7) aufweist.

2. Testanlage nach Anspruch 1,
wobei das Gehäuse (2) als Seecontainer (2) ausgebildet ist.

3. Testanlage nach Anspruch 1 oder 2,
wobei die Einspeisung (5) einen Einspeiseadapter (10) aufweist, mittels dem der Umrichtersteuerschrank (4) an Stromzuführungen unterschiedlicher Spannungen anschließbar ist.

4. Testanlage nach Anspruch 3,
wobei der Einspeiseadapter (10) als Spartransformator (10) ausgeführt ist.

5. Testanlage nach einem der vorhergehenden Ansprüche,
wobei der Stromanschluss (9) einen Netzadapter (11) aufweist, mittels dem die Testanlage (1) an Stromzuführungen unterschiedlicher Spannungen anschließbar ist.

6. Testanlage nach Anspruch 5,
wobei der Netzadapter (11) als Spartransformator (11) ausgeführt ist.

7. Testanlage nach einem der vorhergehenden Ansprüche,
wobei der Rechner (6) und die Staubmesseinrichtung (3) mittels einer Datenverbindung (12) miteinander verbunden sind.

8. Testanlage nach einem der vorhergehenden Ansprüche,
wobei der Rechner (6) eine Schnittstelle (13) zur Datenübertragung aufweist, über die die Testanlage (1) fernsteuerbar ist.

9. Testanlage nach einem der vorhergehenden Ansprüche,
wobei im Inneren des Gehäuses (2) ein Bedienplatz (14) vorgesehen ist, der durch zumindest eine elektrisch isolierte Wand (15) vor Hochspannung geschützt ist.

10. Testanlage nach einem der vorhergehenden Ansprüche mit einem Hochspannungs-Gleichrichtergerät (16), das an den Umrichtersteuerschrank (4) anschließbar ist, sowie Kabeln (8) zum Anschluss des Hochspannungs-Gleichrichtergeräts (16) an einen Hochspannungsanschluss der Elektrofilteranlage.

11. Testanlage nach einem der vorhergehenden Ansprüche mit einer Klimaanlage (17).

12. Testanlage nach einem der vorhergehenden Ansprüche,
wobei das Innere des Gehäuses (2) Abluftkanäle mit Ventilatoren aufweist.

## Claims

1. Test installation (1) for an electrical filter installation, wherein the test installation (1) has, in the interior of a housing (2), a converter control cabinet (4), a feed (5) for the converter control cabinet (4), a computer (6), cables (8) for connecting the converter control cabinet (4) to a high-voltage rectifier for the electrical filter installation, as well as a power connection (9), and wherein the housing (2) has cut-outs for passing through at least the cables (8) and power supplies for the feed (5) and for the power connection (9)
**characterized in that** the test installation (1) has, in the interior of the housing (2), a dust measurement device (3), connecting apparatuses (7) for connecting the dust measurement device (3) to a clean and a raw-gas dust channel of the electrical filter installation, and the housing (2) has cut-outs for passing through at least the connecting apparatuses (7).

2. Test installation according to Claim 1, wherein the housing (2) is designed as a seaworthy container (2).

3. Test installation according to Claim 1 or 2, wherein the feed (5) has a feed adapter (10), by means of which the converter control cabinet (4) can be connected to power supplies of different voltages.

4. Test installation according to Claim 3, wherein the feed adapter (10) is designed as an autotransformer (10).

5. Test installation according to one of the preceding claims, wherein the power connection (9) has a mains adapter (11), by means of which the test installation (1) can be connected to power supplies of different voltages.

6. Test installation according to Claim 5, wherein the mains adapter (11) is designed as an autotransformer (11).

7. Test installation according to one of the preceding claims, wherein the computer (6) and the dust measurement device (3) are connected to one another by means of a data connection (12).

8. Test installation according to one of the preceding claims, wherein the computer (6) has a data transmission interface (13), by means of which the test installation (1) can be controlled remotely.

9. Test installation according to one of the preceding claims, wherein an operator station (14), which is protected against high voltage by at least one electrically insulated wall (15), is provided in the interior of the housing (2).

10. Test installation according to one of the preceding claims having a high-voltage rectifier (16), which can be connected to the converter control cabinet (4), and cables (8) for connecting the high-voltage rectifier (16) to a high-voltage connection of the electrical filter installation.

11. Test installation according to one of the preceding claims having an air conditioning system (17).

12. Test installation according to one of the preceding claims, wherein the interior of the housing (2) has air outlet channels with fans.

## Revendications

1. Installation ( 1 ) d'essai pour une installation d'électrofiltre, dans laquelle l'installation ( 1 ) d'essai a à l'intérieur d'une enveloppe ( 2 ) un coffret ( 4 ) de commande de convertisseur, une alimentation ( 5 ) du coffret ( 4 ) de commande de convertisseur, un ordinateur ( 6 ), des câbles ( 8 ) de raccordement du coffret ( 4 ) de commande de convertisseur à un appareil redresseur de haute tension de l'installation d'électrofiltre, ainsi qu'une borne ( 9 ) de courant et dans laquelle l'enveloppe ( 2 ) a des évidements pour le passage au moins des câbles ( 8 ) ainsi que des amenées de courant pour l'alimentation ( 5 ) et pour la borne ( 9 ) de courant,
**caractérisée en ce que**
l'installation ( 1 ) d'essai a à l'intérieur de l'enveloppe ( 2 ) un dispositif ( 3 ) de mesure de poussière, des dispositifs ( 7 ) de raccordement pour la liaison du dispositif ( 3 ) de mesure de poussière à un canal de poussière de gaz propre et un canal de poussière de gaz brut de l'installation d'électrofiltre et l'enveloppe ( 2 ) a des évidements pour le passage d'au moins les dispositifs ( 7 ) de raccordement.

2. Installation d'essai suivant la revendication 1,
dans laquelle l'enveloppe ( 2 ) est constituée sous la forme d'un conteneur ( 2 ) maritime.

3. Installation d'essai suivant la revendication 1 ou 2,
dans laquelle l'alimentation ( 5 ) a un adaptateur ( 10 ) d'alimentation au moyen duquel le coffret ( 4 ) de commande de convertisseur peut être raccordé à des amenées de courant de tensions différentes.

4. Installation d'essai suivant la revendication 3,
dans laquelle l'adaptateur ( 10 ) d'alimentation est réalisé sous la forme d'un autotransformateur ( 10 ).

5. Installation d'essai suivant l'une des revendications précédentes,
dans laquelle la borne ( 9 ) de courant a un adaptateur ( 11 ) de réseau, au moyen duquel l'installation ( 1 ) d'essai peut être raccordée à des amenées de courant de tensions différentes.

6. Installation d'essai suivant la revendication 5,
dans laquelle l'adaptateur ( 11 ) de réseau est réalisé sous la forme d'un autotransformateur ( 11 ).

7. Installation d'essai suivant l'une des revendications précédentes,
dans laquelle l'ordinateur ( 6 ) et le dispositif ( 3 ) de mesure de poussière sont reliés entre eux au moyen d'une liaison ( 12 ) de données.

8. Installation d'essai suivant l'une des revendications précédentes,
dans laquelle l'ordinateur ( 6 ) a, pour la transmission de données, une interface ( 13 ), par laquelle l'installation ( 1 ) d'essai peut être télécommandée.

9. Installation d'essai suivant l'une des revendications précédentes,
dans laquelle il est prévu à l'intérieur de l'enveloppe ( 2 ) un emplacement ( 14 ) de commande, qui est protégé de la haute tension par au moins une paroi ( 15 ) isolée électriquement.

10. Installation d'essai suivant l'une des revendications précédentes,
comprenant un appareil ( 16 ) redresseur de haute tension qui peut être raccordé au coffret ( 4 ) de la commande de convertisseur, ainsi que des câbles ( 8 ) pour la connexion de l'appareil ( 16 ) redresseur de haute tension à une borne de haute tension de l'installation d'électrofiltre.

11. Installation d'essai suivant l'une des revendications précédentes,
comprenant une installation ( 17 ) de conditionnement d'air.

12. Installation d'essai suivant l'une des revendications précédentes,
dans laquelle l'intérieur de l'enveloppe ( 2 ) a des canaux pour de l'air vicié ayant des ventilateurs.
